# EUROPÄISCHE PATENTANMELDUNG

(11) **EP 2 743 499 A2**
(43) Veröffentlichungstag der Anmeldung: **18.06.2014**
(21) Anmeldenummer: 13005527.0
(22) Anmeldetag: 28.11.2013
(51) Int. Cl.: F03D 1/04

(54) **Hochleistungsfähiger Windenergie-Generator auf Basis des Venturi-Effekts**

(30) Priorität: 12.12.2012 DE 202012012118 U
(71) Anmelder: Gauch, Rainer, 67475 Weidenthal (DE)
(72) Erfinder: Gauch, Rainer, 67475 Weidenthal (DE)

(57) **Zusammenfassung**

Auf dem Gebiet der Erzeugung erneuerbarer Energien aus Windkraft haben sich Anlagen durchgesetzt, die in Horizontale und Vertikale in neue Dimensionen vorstoßen (Stichworte: Flächenverbrauch, Stromtrassen, Turmmasten). Es entstanden an Land und auf See Großanlagen mit teils gewaltigen Ausmaßen. Der Verbrauch an Ressourcen, Eingriffe in die Umwelt, Zerstörung von Natur und Landschaft sowie die Gefährdung von Mensch und Tier nehmen dementsprechend unkalkulierbar zu, falls diese Tendenz anhält.

Die dadurch gestellte Aufgabe, dieser Entwicklung ein Regulativ parallel zur Verfahrensoptimierung zu verpassen, läßt sich unter Rückgriff auf den Venturi-Effekt aus der Strömungsmechanik befriedigend lösen. Diesem Effekt zufolge nehmen Luftströmungen beim Passieren der Engstelle eines Tubus eine höhere kinetische Energie an. Der an dieser Tubus-Engstelle installierte Windrotor generiert eine signifikant höhere Leistung. Damit korrespondiert ein Plus an elektrischer Energie des angegliederten Stromgenerators. Der Reduktions- und Optimierungseffekt ist offensichtlich.

## Beschreibung

### A Wirkprinzip

Das Wirkprinzip basiert auf dem Venturi-Effekt aus der Aerodynamik. Dieser besagt, dass die Strömungs-Geschwindigkeit eines durch einen Tubus strömenden flüssigen oder gasförmigen Mediums sich umgekehrt proportional verhält zum sich verändernden Querschnitt des Tubus. Konkret: Die Geschwindigkeit, mit der eine bestimmte Menge Luft durch einen Tubus strömt, wird höher, je enger der Querschnitt des Tubus ist.

Ein innerhalb dieser Engstelle installiertes Windrad (Rotor) wird dementsprechend eine höhere Drehzahl annehmen. Über eine Welle mit einem Strom-Generator verbunden resultiert daraus eine signifikant höhere elektrische Energie.

### B Auswirkung dieses Prinzips auf den Sektor "Windenergie-Nutzung"

Soweit erkennbar, findet dieses Prinzip auf diesem Sektor bisher keine breite großtechnische Anwendung. In einem einzigen Fall, dem Bau des Pearl River Tower in China, wurde dieses Prinzip zum Betrieb einer senkrechten Turbine realisiert. Die modernen Windkraftanlagen arbeiten im Grunde immer noch nach dem Prinzip, das für die Windmühlen von einst gegolten hat. Was sich dort jahrhundertelang bewährte, lässt sich nicht eins zu eins auf unsere aktuellen Anforderungen im Bereich erneuerbarer Energien übertragen. Herkömmliche Konstruktionsprinzipien können oftmals zum Hemmschuh werden, wenn sie unter Aufgabe ihres bisherigen Aufgabenspektrums einen neuen, anders gearteten Aufgaben-Schwerpunkt erhalten.

Die jetzigen und früheren Anforderungen vertragen sich schwer miteinander, das System wird überfordert und droht zu kollabieren. Gerade auf dem Sektor Windenergie läßt diese Fehlentwicklung sich an zwei Merkmalen ablesen. Zu einen an den gigantischen Dimensionen, die diese Anlagen inzwischen angenommen haben.

Des weiteren an den flächenfressenden, unverhältnismäßig langen und aufwendigen Transportwegen und - kapazitäten (" Stromautobahnen") innerhalb der Republik zwischen den teils abgelegenen, randständigen Entstehungsorten (z. B. off shore) bis hin zu den Verbrauchern in den industriellen Zentren und Ballungsgebieten.

**Fazit:** Die Gewinnung erneuerbarer Energie aus Windkraft leidet unter Hypertrophie und daraus resultierender Ineffizienz.

### C Vorteile

Es ist davon auszugehen, daß alle diese Probleme zu lösen sind, sofern der physikalische Venturi-Effekt bei der Nutzung der Windenergie seine konsequente, großtechnische Anwendung findet.

Die üblichen Turmmasten werden überflüssig, bundesweite Strom-Trassen sind entbehrlich. Der Verbrauch der Ressourcen reduziert sich erheblich, Umwelt und Natur werden nachhaltig geschont.

Die Akzeptanz wird sich deutlich erhöhen.

Technisch innovativ an der Erfindung ist die Tatsache, daß der Rotor in einem Tubus läuft, mit dem er eine Einheit bildet (Modul).

Der durchwegs in Bodennähe installierte Tubus lässt sich auslegen als eine den verschiedensten Gegebenheiten sich anpassende, variable und zugleich robuste Ummantelung und Teil-Verkapselung des Rotors. Dieser Vorteil schützt den Rotor vor allen

Witterungseinflüssen und den davon ausgehenden Scherkräften.

Es eröffnet sich eine riesige Bandbreite an Möglichkeiten betr. Dimension und Ausgestaltung dieser Anlage als auch zu ihrer Verortung (z. B. an und in Industrie-, Büro- und auch Wohnbauten)

Für die großtechnische Anwendung des unter Punkt A zkizzierten Wirkprinzips - dem Venturi-Effekt - zur Gewinnung elektrischer Energie aus Windkraft wird hiermit umfassend Patentschutz begehrt. Folgende Vorteile lassen sich damit erzielen:
- Deutliche Erhöhung des Wirkungsgrads
- Reduzierung der Kosten
- Große Variationsbreite und Anpassungsfähigkeit
- Entbehrlichkeit von Turmmasten
- Verbrauchernahe Stromerzeugung
- Minimierung der Eingriffe in die Landschaft
- Ressourcenschonung, Schonung von Flora und Fauna
- Akzeptanz-Zunahme

### D Ausführung

Innerhalb eines liegenden Tubus, der als gerader, geschlossener Kreiszylinder glattwandig gestaltet ist, befindet sich eine Engstelle, die seinen Querschnitt mittig verkleinert. Exakt an dieser Engstelle bewegt sich auf einer Welle ein Rotor und treibt einen Stromgenerator an. Ausmaß und Ausformung der Engstelle sowie die Gestaltung des Rotors lassen sich erst präzisieren nach Auswertung eines anwenderorientierten mathematischen Modells und dessen Realisierung in einem Pilotprojekt. Zum Konzept der Anlage wird auch gehören, die Rotorblätter programmgesteuert wechselnden Betriebs- und Belastungszuständen anzupassen.

## Patentansprüche

1. Hochleistungsfähiger Windenergie-Generator auf Basis des Venturi-Effekts
**dadurch gekennzeichnet,**
**dass** Wind in einen Zustand höherer kinetischer Energie gerät beim Passieren einer zentriert eingebauten Engstelle innerhalb eines liegenden Tubus, der als gerader glattwandiger Kreiszylinder ausgeführt ist. Querschnitt und Länge des Tubus variieren bedarfsorientiert in weiten Grenzen.

2. Hochleistungsfähiger Windenergie-Generator nach Anspruch 1,
**dadurch gekennzeichnet,**
**dass** dieser energetisch angeregte Wind in der kreisrunden Engstelle dieses Tubus einen Wind - Rotor bewegt, der die Engstelle ganz ausfüllt und mittels seiner Welle einen Generator zur Erzeugung elektrischer Energie antreibt.

3. Hochleistungsfähiger Windenergie-Generator nach einem der vorhergehenden Ansprüche,
**dadurch gekennzeichnet,**
**dass** die Rotor - Flügel bzw. - Blätter in konsequenter Leichtbauweise ausgeführt sein können, weil nur schwache Scherkräfte auf sie einwirken.

4. Hochleistungsfähiger Windenergie-Generator nach einem der vorhergehenden Ansprüche,
**dadurch gekennzeichnet,**
**dass** die Rotor-Flügel bzw. - Blätter trotz einer im Vergleich mit herkömmlichen Windrädern geringeren Spannweite wegen ihrer extrem leichten Bauart u. U. eine verstärkte Struktur sowie eine in die Tubus-Wand eingelassene Führung erhalten, damit ihre Stabilität und
Biegefestigkeit bei allen Betriebszuständen und Lastwechseln gewährleistet ist.

5. Hochleistungsfähiger Windenergie-Generator nach einem der vorhergehenden Ansprüche,
**dadurch gekennzeichnet,**
**dass** die Rotor-Flügel bzw. -Blätter programmgesteuert ad hoc sowohl Form als auch Anstellwinkel auf wechselnde Parameter einstellen können, zur Erzielung eines maximalen Wirkungsgrads

6. Hochleistungsfähiger Windenergie-Generator nach einem der vorhergehenden Ansprüche,
**dadurch gekenneichnet,**
**dass** die mehrflügeligen Rotoren sich der Charakteristik von Turbinen angleichen können, wenn es technisch geboten erscheint.

7. Hochleistungsfähiger Windenergie- Generator nach einem der vorhergehenden Ansprüche,
**dadurch gekennzeichnet,**
**dass** innerhalb eines der potentiellen Energiesteigerung dienenden Tubus-in-Tubus Systems der innenliegende Tubus die überdimensionale, windschnittig geformte Hohlwelle des Rotors bildet, in etwa einem Strahltriebwerk entfernt ähnlich.

8. Hochleistungsfähiger Windenergie-Generator nach einem der vorhergehenden Ansprüche,
**dadurch gekennzeichnet,**
**dass** der Tubus wegen seiner relativ überschaubaren Ausdehnungen sich den landschaftlichen Gegebenheiten flexibel anpasst, eine gute Voraussetzung für die Nutzung thermischer Aufwinde.

9. Hochleistungsfähiger Windenergie - Generator nach einem der vorhergehenden Ansprüche,
**dadurch gekenneichnet,**
**dass** in Lagen mit saisonal unterschiedlichen oder schwer berechenbaren wechselnden Windrichtungen auch der Einsatz einer mobilen, halb- bzw. vollautomatisierten Tubus - Batterie möglich und sinnvoll ist.
